# EUROPEAN PATENT APPLICATION

(11) **EP 2 749 169 A2**
(43) Date of publication of application: **02.07.2014**
(21) Application number: 12821638.9
(22) Date of filing: 06.08.2012
(51) Int. Cl.: A23B 4/03, A23B 7/00

(54) **METHOD, UNIT AND DEVICE FOR A TREATMENT INVOLVING THE DRYING, CURING AND PRESERVATION OF SOLID OR SEMI-SOLID FOODS**

(30) Priority: 08.08.2011 ES 201100926
(71) Applicant: Godoy Varo, José Luis, 17244 Cassà de la Selva (Girona) (ES)
(72) Inventor: Godoy Varo, José Luis, 17244 Cassà de la Selva (Girona) (ES)
(86) International application number: PCT/ES2012/070612
(87) International publication number: WO 2013/021086

(57) **Abstract**

The process comprises of the drying, curing and conservation of solid and semi-solid foodstuffs through the application of pressure changes of a value equal, greater or less than atmospheric pressure, for the administration and control of an oxidising gas and subsequent extraction from the chamber. The installation is composed of a hermetically-sealed chamber or recipient with mechanisms to apply positive or negative pressure, along with systems of temperature and moisture control.

## Description

### Sector of the technique

The device presented in this document concerns the drying, curing and conservation of solid or semi-solid products from the food sector (foodstuffs).

Firstly, the document outlines a procedure to introduce the food product into a hermetically sealed chamber, receptacle or recipient with multiple configurations, which for the purpose of this document is hereby referred to as "the chamber".

The proposed method permits a procedure to introduce the food product into a hermetically sealed chamber subsequently applying pressures that vary during the course of the treatment, adopting both positive and negative values in relation to the original pressure.

Therefore, when this document refers to a positive pressure, it is understood that the pressure (in millibars) is higher than the value previously applied, and a negative pressure is lower than the value previously applied. Typically the pressure is understood to fall within a range of values higher or lower than the atmospheric pressure on Earth.

For other cases, the variations in pressure proposed in this patent, both higher and lower, are found within a range of 10 to 500 millibars of absolute pressure, always with respect to the starting pressure. Where possible, brisk changes of pressure are to be avoided, and said pressure is to be monitored and maintained during a determined period of treatment.

The installation and operation of the device is also outlined in this document.

The method for the device in question can be applied to the following foodstuffs, amongst others:
A.- Elaborated red meat products such as beef and pork and/or elaborated white meat products from poultry, chicken and rabbit. Application is also possible for cured meat products such as hamo n the bone, salami and other cured sausage products.
B.- Dairy products such as cheese.
C.- Fish products, including whole fish or fillets.
E.- Products derived from fresh meat being treated for more rapid consumption, namely an accelerated rest period.
F.- Fruit products in order to achieve faster ripening and superior conservation.
G.- Products derived from cacao beans in order to reduce bitterness and improve organoleptic qualities.

The methodology assumes the introduction of an oxidising agent into the chamber, along with a selective extraction of gases in order to permit:
- The dissolution in the foodstuff of atmospheric oxygen O₂ for its conservation; and
- Combining and adding to the dissolved O₂ in the foodstuff at least one inert gas such as N₂ or CO₂, for the durability of the conservation of the product.

### Previous and existing techniques.

Currently, drying systems already exist which permit the treatment of the afore-mentioned products through the control of temperature and humidity.

A clear example is static dryers found in mountainous areas to obtain cured hams and cheeses. Through careful use of window openings, the circulation of currents of fresh dry air creates the necessary conditions. However, it should be taken into account that the altitude of the dryer is not quantified, as the basic condition is for the pressure to be lower than that of other low-lying areas, permitting higher evaporation of moisture in the foodstuff for equivalent temperatures.

Cheese dryers also exist that are installed in warehouses with controlled temperature and humidity. The recirculation of damp air from inside the dryer, passing through condensers, reduces the moisture content in order to cure the cheese. Due to imperfections in the administration of the circulating air, it is difficult to achieve a homogeneous drying process.

Another known technique is allowing fresh meat to sit in refrigerators with controlled temperature, thereby achieving improvements in tenderness and taste for subsequent cooking.

In US 3067043, US 3971854 and WO2005092109 methods are described to accelerate the treatment of products, in particular sliced meat, in a hermetically-sealed chamber in order to dehydrate the product under reduced pressure. Various gases are introduced into the chamber and the temperature is controlled.

US 6596330 outlines a process for the preparation of meat products, including a drying time in a mould which applies pressure to the meat for a period of approximately one month in a tower press.

JP 11063821 describes a foodstuff dryer which maintains a difference in pressure between the interior and the exterior of the chamber, which also includes heaters, performing an extraction of the air and gases from the inside of the chamber by depressurising.

EP 0223887 introduces the raw foodstuff in the interior of a chamber and reduces the pressure to between 133 Pa and 667 Pa, following a phase of chilling and final irradiation of the foodstuff using infra-red energy.

In US 3230 633 and JP2009039000 drying methods are described which are composed of changes in pressure in a refrigerated space. In the methodology of these two patents the pressure is always less than atmospheric.

Notwithstanding, the afore-mentioned precedents do not divulge a drying treatment where the foodstuff is subject to changes for pre-determined periods of time to pressure values that can be equal, higher or lower to a range of atmospheric pressures (the change in pressure is controlled with possible repetition of cycles), in addition to changes in temperature and moisture inside the chamber. In contrast to the afore-mentioned methods, the proposed method also permits the drying and curing using controlled administration o fan oxidising gas, along with the gases resulting from the reaction, for products destined for human consumption. It should be taken into account that in any curing process the foodstuff requires oxygen consumption to take place correctly due to the bacterial content and evolution of naturally-occurring chemicals.

It should be noted that owing to its natural composition or to the subsequent administration of chemicals products, each foodstuff to be treated will need a specific quantity of oxygen. The said invention therefore has the capacity to control the O₂ administered for each case. For example, with the administration of atmospheric air (assuming a uniform composition of around 21% of O₂) with precision and controlling the duration, the microorganisms, bacteria etc. can be provided with the correct predetermined quantity, causing a chemical reaction of other gases which are subsequently removed from the chamber through controlled depression. The controlled repetition of these cycles of pressure and time, along with the combination of temperatures, allows for a uniform accelerated treatment. It is also recommended to remove gases between pressure changes as the resulting gases from the O₂ reaction can produce undesired effects.

A treatment which permits the improved conservation through dissolution of atmospheric oxygen into the foodstuff, or the application of inert gases combining them with dissolved oxygen, in a final phase of the curing process is not known.

### Presentation of the invention

The invention presented in this document concerns, as one of its possible applications, the acceleration of the drying and curing process of solid or semi-solid products destined for human consumption at industrial scale. Said products can be entire or smaller cuts of meat, fillets or cured sausages from beef, pork etc. The invention can also be used for dairy products and lactics such as cheese, along with fruit, whole or filleted fish, and cocoa bean products including chocolate. Its application to other foodstuffs for human consumption is also possible.

The domestic and commercial use (e.g restaurants) is also considered possible for products such as beef steaks or for ripening of fruit, allowing a faster, more uniform and efficient preparation.

For the application to drying and curing of cheese, ham, sausages, fish etc., at industrial scale it is necessary, as in the previous cases, to dispose of a hermetically-sealed recipient setup to receive positive and negative pressures, encompassing a range of atmospheric pressures, where control systems will be installed for pressure, temperature and moisture. The control of moisture can be undertaken using heat exchangers with capacity to refrigerate, compress, control and recirculate the internal air. The recirculation can be independent to or combined with other elements which move the air. It should be noted that if the product is found at an atmospheric pressure of 740 millibars, similar to an altitude of approximately 2500 metres, the recirculation of the internal air in the chamber should be increased comparative to that of sea level, to obtain the same results as at altitudes where the air density is greater.

The methodology of this invention applicable to the drying, curing and conservation of solid and semi-solid foodstuffs, said foodstuffs are placed inside a hermetically-sealed chamber and varying pressure values equal, inferior or superior to atmospheric pressure are applied and maintained for determined periods of time during the treatment.

An important aspect of the method is the prevision of means to make an selective, controlled aperture in the chamber in order to connect with the external atmosphere, with the aim of renewing the internal atmosphere for a determined time, at intervals during the drying, curing and conservation process. In addition, monitoring of the internal and external atmospheres is provided for, before forming the aperture, in order to check the correct flow direction from inside to out, or vice versa.

The cited values equal, superior or inferior to atmospheric pressure at the moment of introducing the foodstuffs in the chamber or recipient are obtained through methods of pressurisation or vacuum associated with the afore-mentioned hermetically sealed chamber.

The method also allows for the introduction of a prefixed volume of oxidising agent (for example ozone or oxygen) and the selective realisation during a pre-fixed period of time, of an extraction of part of the gases present in the chamber.

In one dry run the use of the treatment chamber as a hyperbaric chamber has been undertaken.

Therefore, the procedure will take place in the afore-mentioned chamber creating an atmosphere with a controlled pressure equal to that of a mountainous area (as for conventional treatment). A depressurising process will take place to a pre-determined value, for example an absolute value of 800 millibars applied to the inside of the chamber. On achieving the desired depressurisation, a rising mist will be observed through the view holes arising from the vapour given off by the foodstuffs at low pressure. At the same time, when the moisture sensors arrive to their predetermined value, they activate the ventilators and the exchanger, removing the damp air and directing it towards the interchanger where it condenses, the moisture thereby being removed from the chamber and the dry air being returned to the chamber.

After a pre-determined period of time depending on the quantity of foodstuff to be treated, a positive pressure is applied, in this example that of 1,050 millibars absolute pressure with atmospheric air, which gives rise to penetration and reaction of the oxygen into the foodstuff , thereby curing more easily and quickly. It should be noted that the duration for each of the pressure values is pre-determined, for the example given this would be of approximately 10 minutes for each of the positive and negative values.

Whilst the time parameter is determined by the thickness of the foodstuffs to be cured, it can be varied and applied with rising or falling parameters of the original values, along with the pressure values.

The repetition of said changes of absolute pressure, with the administration of atmospheric oxygen and the combination of temperature and moisture content, along with the increased evaporation at low pressure accelerates the curing process to a question of days. It should also be highlighted that pressure ranges higher or lower than atmospheric pressures, along with the administration of oxidising gases such as Ozone or O₂, to increase existing atmospheric values, are also possible with the development of this invention.

Refreshing the air inside the chamber is recommended between absolute pressure changes through an aperture to the external atmosphere. It is also possible to remove gases from the chamber using ventilators. Simultaneously, the moisture that has formed and been deposited in the interchangers can also be removed and flushed away at this time.

The said treatment is also possible in foodstuffs that need to conserve their aroma, by using a membrane to selectively filter gases during the depression phase. In this phase it should be noted that the membranes are frequently blocked by the aromatic molecules and it is therefore advisable, when changing to positive pressure, to apply the pressure change to the interior side of the membrane, in the opposite direction, so as to force the aromas to return to the chamber. If a more thorough cleaning of the membrane is required, such as for the case of viscous liquids arising from the foodstuffs to be treated, it is possible to undertake cleaning using at least one vapour cycle from the inside of the membrane forcing out the obstructing materials.

In addition, during the conservation of aromas, it should be taken into account that during the phase of ventilation to the external atmosphere a random change in pressure is to be applied to achieve ventilation of the chamber. This is to be achieved using external pressure sensors such that connection is made with the external atmosphere, only when the external pressure is higher than the internal pressure in the chamber. This permits the gases surrounding the chamber to enter whilst retaining, as a result of the pressure differential, the necessary aromas.

In the same way it is possible to impregnate smoked aromas to dairy, meat and fish products. In order to achieve said impregnation, the depression in the inside of the chamber can be used to inject aromas, contained in an adjacent receptacle at a pressure higher than that of the chamber. Once the valve that connects the two chambers is open and the aroma enters the chamber, it is possible to apply a positive pressure so that the aroma penetrates the foodstuff.

It is also important to note that in order to achieve a homogenous treatment process, it is possible to install a mobile circuit in the upper part of the chamber, where the foodstuff to be treated can be suspended from a mechanised rotating circuit. This also permits easier loading and unloading of the foodstuff into the chamber.

In accordance with the type of treatment to be undertaken and in the case that moisture levels need to be maintained to prevent dry cracking of the foodstuff, it is possible to introduce additional moisture or vapour. Note that vapour would provoke a temperature rise in the chamber.

During the said drying and curing process, predetermined temperatures are to be used. However, it is also possible at the end of the process to reduce the temperature surrounding the foodstuff by following a process of repeated pressurising and depressurising or creating a vacuum, for example using compressed air for a set period of time so that the oxygen that no longer reacts and is not consumed dissolves in the foodstuff which is subsequently packed and sealed. The dissolved O₂ remains in the foodstuff after packing providing the seal is hermetic and it is maintained at fridge temperatures, thereby encouraging a more intense smell when the consumer opens the product. One of the advantages of such dissolution is the possibility to vacuum pack the product prior to sealing thereby retaining the dissolved O₂. This protects foodstuffs from possible contamination of some microorganisms. It is also possible to add inert gases such as N₂ or CO₂ (including a combination thereof) before sealing in order to conserve the end product.

It is also possible to construct smaller hyperbaric chambers or recipients for domestic use. Such chambers can be mobile and stored on shelves or refrigerators. Using at least one pneumatic connection, the recipient can be connected to a compressed air generator located outside of the refrigerator. In such cases the compressor is to include a range of both positive and negative pressures. When oxygen is one of the precursors for the curing process, such as in the case of meat, it should also be noted that the pressurising system includes at least one two-way valve to refresh the internal atmosphere. Such a process is also viable for the ripening and conservation of fruit.. In the case of accelerating curing of meat products, it is possible to introduce where necessary a grille between the product and the tray underneath, in order to separate the liquid elements that arise from the process. Similarly, it is possible to include a hermetically-sealed (with thermostat) container between the internal connection to the refrigerator, whereby spices and other aromatic agents can be used to improve the sensorial qualities of the product.

In certain cases, a gas membrane can be used to permit the circulation and renewal of atmospheric gases at negative pressures whilst retaining the aromatic molecules. It is recommended said filter is also used at positive pressures in order to unblock and redirect the aromas towards the product.

### Description of the figures.

Figure 1
Perspective view of the hyperbaric chamber. Reinforced structure to resist positive and negative pressure greater than atmospheric values. The components prior to positive and negative pressures are also illustrated. Diary products ready to be introduced into the chamber are also shown.

| | |
|---|---|
| Nº1.01 | Hermetic gas container. |
| Nº1.02 | Dairy product, in this case a round cheese. |
| Nº1.03 | Refrigerating equipment for drying the product. |
| Nº1.04 | Positive pressure generator. |
| Nº1.05 | Drying refrigerator for the gases generated in 1.04. |
| Nº1.06 | Compressed air accumulator. |
| Nº1.07 | Vacuum drum equipment. |
| Nº1.08 | Vacuum storage. |
| Nº1.09 | Heat exchanger to control moisture and temperature of the external atmosphere as it circulates towards the inside of the chamber. |
| Nº1.10 | Intermediate valves between the circulating atmosphere and inside of the chamber. Where necessary, connected to the exchanger 1.09. |
| Nº1.11 | Access doors for loading/unloading. |
| Nº1.12 | Storage of humidifying liquids. |
| Nº1.13 | Transportation belt to load product. |
| Nº1.14 | Transport belt to unload product. |
| Nº1.15 | Positive pressure tubes. |
| Nº1.16 | Refrigerating equipment for the temperature control of the exchangers in 1.09. |
| Nº1.17 | Electrical control panel and IT control. |
| Nº1.18 | Internal pressure sensor. |
| Nº1.19 | Internal moisture sensor. |
| Nº1.20 | Internal temperature sensor. |
| Nº1.21 | Absolute pressure sensor for air surrounding the chamber. |

Figure 2
Top-down view of the chamber showing the circulation system of the product and the robotic arm to manipulate said products.

| | |
|---|---|
| Nº2.01 | Robotic arm. |
| Nº2.02 | Closed-circuit transporter belt. |
| Nº2.03 | Drive motor for belt 2.02. |
| Nº2.04 | Textile conduit for the distribution of recirculated air. |
| Nº2.05 | Condenser of the refrigerating equipment for drying of product. |
| Nº2.06 | Internal pressure sensor. |
| Nº2.07 | Internal moisture sensor. |
| Nº2.08 | Internal temperature sensor. |
| Nº2.09 | Absolute pressure sensor for air surrounding the chamber. |

Figure 3
Long section of the chamber. The recirculation of the gases using the refrigeration system can be seen, along with product loading/unloading and the removal of liquids from the refrigeration system.

| | |
|---|---|
| Nº3.01 | Support column for the product to be treated. |
| Nº3.02 | Product located on its support. |
| Nº3.03 | Chamber. |
| Nº3.04 | First storage tank of condensed liquids. |
| Nº3.04a | Second storage tank of condensed liquids. |
| Nº3.05 | Valve for condensing removal of first storage tank. |
| Nº3.05a | Valve for condensing removal of second storage tank. |
| Nº3.06 | Liquid sprayer for hydrating product. |
| Nº3.07 | Storage tank for liquid sprayer for hydrating product. |
| Nº3.08 | Transporter belt for loading/unloading. |
| Nº3.09 | Distribution tubes for positive pressure. |
| Nº3.10 | Collector tubes for positive pressure. |
| Nº3.11 | Textile conduit for the distribution of recirculated air. |
| Nº3.12 | Return air to drying equipment. |

Figure 4
Section showing pressure entry/exit points along with dairy product supports and drains.

| | |
|---|---|
| Nº4.01 | Connection to vacuum. |
| Nº4.02 | Internal vacuum tubes. |
| Nº4.03 | Drain. |
| Nº4.04 | Drain valve 4.03. |
| Nº4.05 | Regulating vacuum valve. |
| Nº4.06 | Connection to positive pressure. |
| Nº4.07 | Heat exchanger. |
| Nº4.08 | Entry point for positive pressure. |
| Nº4.09 | Intermediate valves between surrounding air and inside the chamber. |
| Nº4.10 | Supporting column for product to be treated. |
| Nº4.11 | Dairy product (in this case, round cheese). |
| Nº4.12 | Internal recirculated air. |

Figure 5
Section showing pressure entry/exit points along with product supports for cured sausage products and drain.

| | |
|---|---|
| Nº5.01 | Vacuum connection. |
| Nº5.02 | Internal tubes for vacuum. |
| Nº5.03 | Drain. |
| Nº5.04 | Valve for drain 5.03. |
| Nº5.05 | Regulating valve for the vacuum. |
| Nº5.06 | Connection for positive pressure. |
| Nº5.07 | Heat exchanger |
| Nº5.08 | Entry point for positive pressures. |
| Nº5.09 | Intermediate valves between circulating atmosphere and the inside of the chamber. |
| Nº5.10 | Support column for product to be treated. |
| Nº5.11 | Meat product hanging from supports. |
| Nº5.12 | Recirculating internal air. |
| Nº5.13 | Oxygen concentration sensor in the internal chamber. |
| Nº5.14 | Oxygen recipient. |
| Nº5.15 | Ball valve for administration of oxygen. |

Figure 6
Section view of the hermetic chamber with the product being processed along with the filter membrane for gases. In addition both sections of the membrane with positive and negative/vacuum pressure functions can be observed.

| | |
|---|---|
| Nº6.01 | Hermetic container. |
| Nº6.02 | Steam connection. |
| Nº6.03 | Negative pressure connection. |
| Nº6.04 | Positive pressure connection. |
| Nº6.05 | Membrane or selective gas filter. |
| Nº6.06 | Meat product. |
| Nº6.07 | Steam control valve. |
| Nº6.08 | Control valve for vacuum opening. |
| Nº6.09 | Positive pressure control valve. |
| Nº6.10 | Positive pressure exit from membrane. |
| Nº6.11 | Unblocked gas molecules from membrane. |
| Nº6.12 | Membrane or selective gas filter. |
| Nº6.13 | Nucleus of the membrane where positive pressure is applied. |
| Nº6.14 | Negative pressure in the direction of the membrane nucleus. |
| Nº6.15 | Blocked aromatic molecules in the membrane surface. |
| Nº6.16 | Membrane nucleus where negative pressure or vacuum is created. |

Figure 7
View of a domestic application where a hyperbaric chamber has been placed in the refrigerator interior, including the pressurising system found on an external table. During this work process the compression of gases can be seen using the mechanical pressurising system.

| | |
|---|---|
| Nº7.01 | Domestic refrigerator. |
| Nº7.02 | Mechanical pressurising element. |
| Nº7.03 | Supporting table for mechanical element. |
| Nº7.04 | Absolute pressure sensor. |
| Nº7.05 | Escape orifice of mechanical element. |
| Nº7.06 | Opening/closing valves for atmospheric air to be compressed in chamber 7.09. |
| Nº7.07 | Pressurising system piston. |
| Nº7.08 | Spindle driven by a motor which displaces the piston. |
| Nº7.09 | Chamber, in this case for gas compression. |
| Nº7.10 | Opening located in the wall of the refrigerator. |
| Nº7.11 | Watertight container or hyperbaric chamber. |
| Nº7.12 | Sealing joint for the chamber lid. |
| Nº7.13 | Lid to close or open the chamber. |
| Nº7.14 | Grating to support the product. |
| Nº7.15 | Example of meat product. |
| Nº7.16 | Positive pressure introduced in the chamber. |
| Nº7.17 | Control system of the process. |

Figure 8
View of a domestic application where a hyperbaric chamber has been placed in the refrigerator interior, including the pressurising system found on an external table. During this work process the gases can be seen expanding using the mechanical pressurising system.

| | |
|---|---|
| Nº8.01 | Domestic refrigerator. |
| Nº8.02 | Mechanical pressurising element. |
| Nº8.03 | Supporting table for mechanical element. |
| Nº8.04 | Absolute pressure sensor. |
| Nº8.05 | Escape orifice of mechanical element. |
| Nº8.06 | Opening/closing valves for atmospheric air to be compressed in chamber 7.09. |
| Nº8.07 | Pressurising system piston. |
| Nº8.08 | Spindle driven by a motor which displaces the piston. |
| Nº8.09 | Chamber, in this case for expanding gas. |
| Nº8.10 | Opening located in the wall of the refrigerator. |
| Nº8.11 | Watertight container or hyperbaric chamber. |
| Nº8.12 | Sealing joint for the chamber lid. |
| Nº8.13 | Lid to close or open the chamber. |
| Nº8.14 | Grating to support the product. |
| Nº8.15 | Example of meat product. |
| Nº8.16 | Negative pressure forcing the gases out of the chamber. |
| Nº8.17 | Control system of the process. |

Figure 9
View of a domestic application where fruit at room temperature is placed in a hyperbaric chamber and detail of a pressurising system on an adjacent table. During this work process the compressed gas can be seen with the intermediate combination of a selective gas membrane located adjacent to the lid.

| | |
|---|---|
| Nº9.01 | Support table for chamber. |
| Nº9.02 | Pressurising mechanical element. |
| Nº9.03 | Support table for mechanical element. |
| Nº9.04 | Absolute pressure sensor. |
| Nº9.05 | Escape orifice for mechanical element. |
| Nº9.06 | Opening/closing valves to atmospheric air to be compressed/depressed in chamber 7.09. |
| Nº9.07 | Pressurising system piston. |
| Nº9.08 | Spindle driven by motor which displaces the piston. |
| Nº9.09 | Chamber, in this case for compression of gases. |
| Nº9.10 | Connecting tubes. |
| Nº9.11 | Watertight container or hyperbaric chamber. |
| Nº9.12 | Sealing joint for the chamber lid. |
| Nº9.13 | Lid for opening/closing chamber. |
| Nº9.14 | Grating to support product. |
| Nº9.15 | Example of fruit, in this case pineapple. |
| Nº9.16 | Positive pressure introduced into the hyperbaric chamber. |
| Nº9.17 | Membrane or selective gas filter. |
| Nº9.18 | Control system of the process. |

Figure 10
View of a domestic application where fruit at room temperature is placed in a hyperbaric chamber and detail of a pressurising system on an adjacent table. During this work process the expanding gas can be seen with the intermediate combination of a selective gas membrane located adjacent to the lid.

| | |
|---|---|
| Nº10.01 | Support table for chamber. |
| Nº10.02 | Pressurising mechanical element. |
| Nº10.03 | Support table for mechanical element. |
| Nº10.04 | Absolute pressure sensor. |
| Nº10.05 | Escape orifice for mechanical element. |
| Nº10.06 | Opening/closing valves to atmospheric air to be compressed/depressed in chamber 7.09. |
| Nº10.07 | Pressurising system piston. |
| Nº10.08 | Spindle driven by motor which displaces the piston. |
| Nº10.09 | Chamber, in this case for expansion of gases. |
| Nº10.10 | Connecting tubes. |
| Nº10.11 | Watertight container or hyperbaric chamber. |
| Nº10.12 | Sealing joint for the chamber lid. |
| Nº10.13 | Lid for opening/closing chamber. |
| Nº10.14 | Grating to support product. |
| Nº10.15 | Example of fruit, in this case pineapple. |
| Nº10.16 | Negative pressure removing the gases from the hyperbaric chamber. |
| Nº10.17 | Membrane or selective gas filter. |
| Nº10.18 | Aromatic molecules blocked at the membrane surface. |
| Nº10.19 | Control system of the process. |

Figure 11
View of an application in an airtight rotating drum where a treatment is being applied to cocoa beans. In this schematic view the pressurising system, vacuum and radiation heating is presented.

| | |
|---|---|
| Nº11.01 | Rotating drum. |
| Nº11.02 | Motor for drum. |
| Nº11.03 | Static mouth of the vacuum, located inside the drum. |
| Nº11.04 | Static driving tube for vacuum. |
| Nº11.05 | Servo valve for vacuum control. |
| Nº11.06 | Static mouth for positive pressure. |
| Nº11.07 | Static driving tube for positive pressure. |
| Nº11.08 | Servo valve for the introduction of positive external pressure and/or depressurisation of the inside of the rotating drum. |
| Nº11.09 | Servo valve for the control of positive pressure entering the rotating drum. |
| Nº11.10 | Airtight rotating Joint/seal. |
| Nº11.11 | Temperature control system (cooling/heating). |
| Nº11.12 | Thermal flow (cooling/heating). |
| Nº11.13 | Chute/funnel for the introduction of material into the drum. |
| Nº11.14 | Loading/unloading door. |
| Nº11.15 | Chute/funnel for unloading treated material. |
| Nº11.16 | Vacuum pump. |
| Nº11.17 | Vacuum tank. |
| Nº11.18 | Vacuum conduit. |
| Nº11.19 | Positive pressure generator. |
| Nº11.20 | Drying refridgerator for the gases generated in 11.19. |
| Nº11.21 | Accumulator of compressed air. |
| Nº11.22 | Positive pressure conduit. |
| Nº11.23 | Directional arrow for the rotation of the drum. |
| Nº11.24 | Electrics and computer control panel. |

Figure 12
View of an application in an airtight rotating drum where a treatment is being applied to cocoa beans. In this schematic view the rotation of the product and the temperature control is presented.

| | |
|---|---|
| Nº12.01 | Rotating drum. |
| Nº12.02 | Traction system. |
| Nº12.03 | Cocoa beans. |
| Nº12.04 | Temperature control system (cooling/heating). |
| Nº12.05 | Thermal flow (cooling/heating). |
| Nº12.06 | Static entry of pressure. |
| Nº12.07 | Funnel/chute for product to be treated. |
| Nº12.08 | Funnel/chute for treated material. |

### Detailed description of an example of a work process.

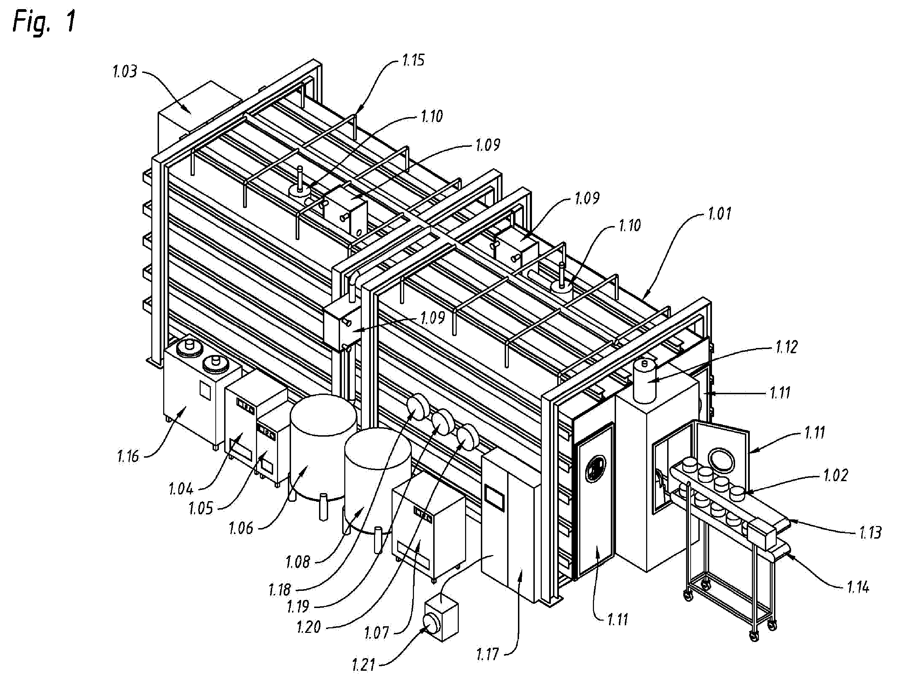

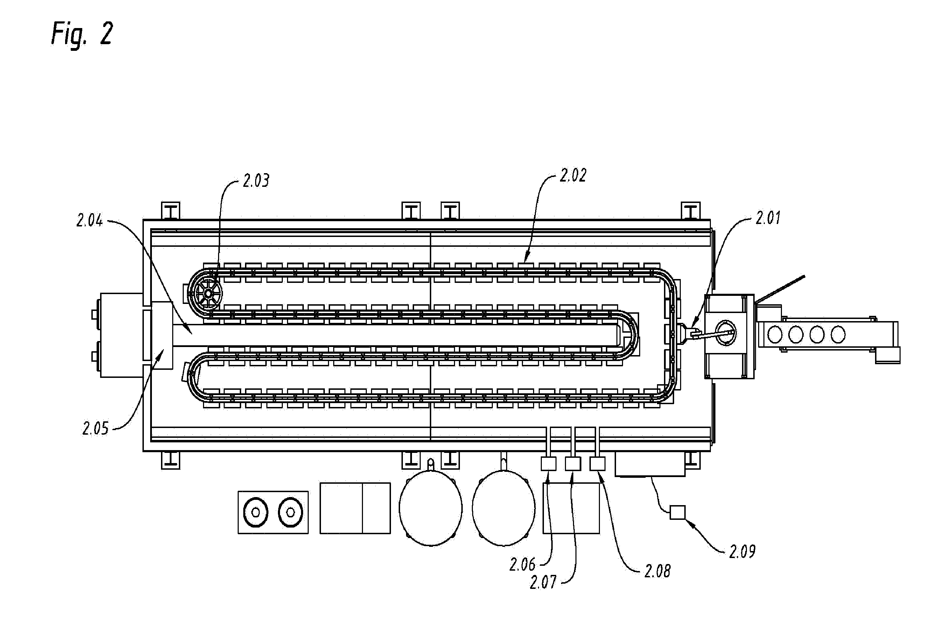

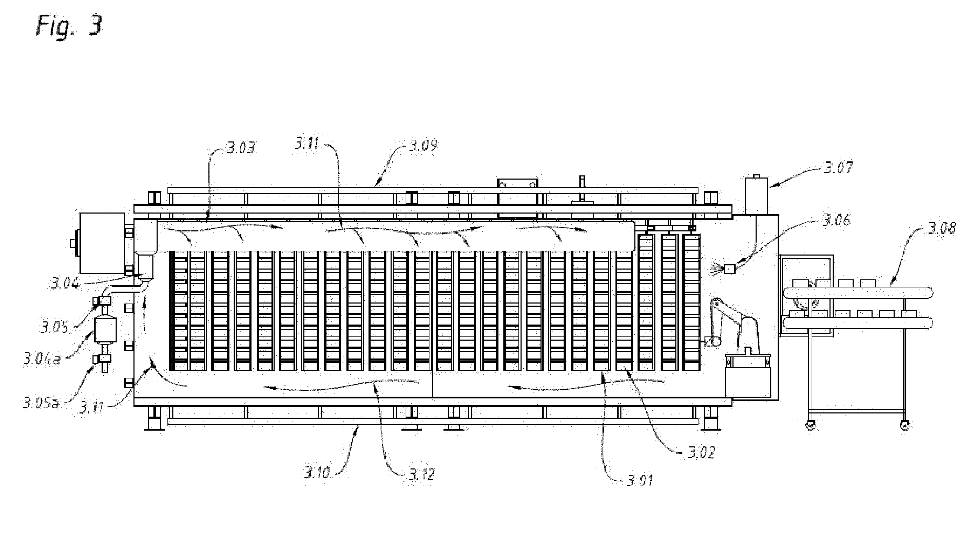

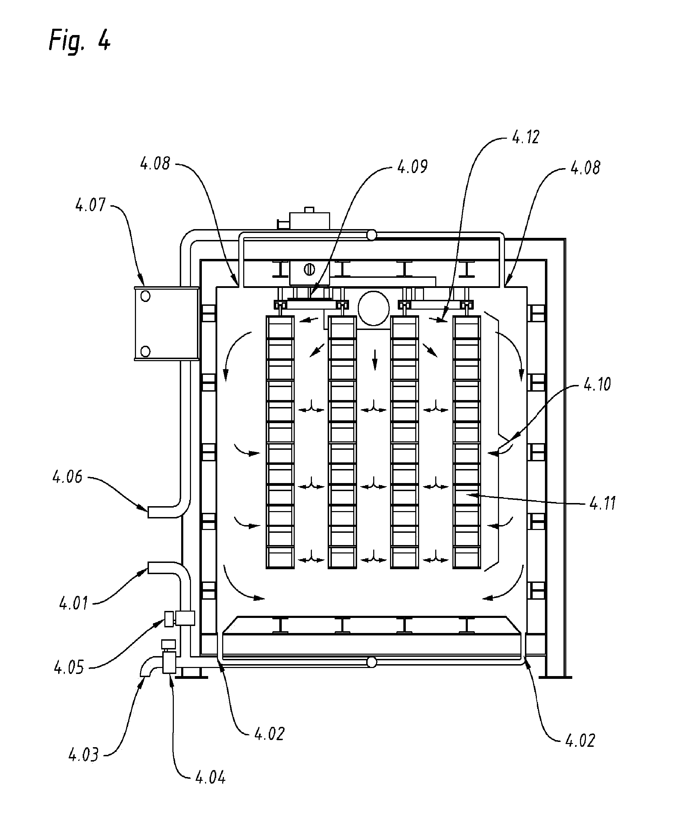

The following description of an example of a work process illustrated in figures 1, 2 and 3 should be considered valid both for the proposed installation for the second application and for the various elements used for the proposed procedure for the first application.

With reference to Figs. 1, 2 and 3, possibly the most economic application is using atmospheric gases, giving results similar or better to those exposed to O₂ in an approximately pure state or other oxidising gases.

A hyperbaric chamber or a container hermetically-sealed to gases 1.01 is provided. In this case the drying or curing of round cheeses in 1.02 will be undertaken. The foodstuff (ref 3.02), in this case 12 cheeses, is placed on individual supports resting on a supporting column. A moving chain is driven by a motorised system which circulates the foodstuff in a closed circuit inside the chamber. The movement permits a homogeneous drying of all the foodstuff. Whilst circulating, the foodstuff passes in front of a robotic arm 2.01 whose function is to turn the cheeses 180º to receive a uniform ventilation. The arm is synchronised with the movement of the foodstuff, at the same time as which a tweezer-action grab gently lifts the cheeses by the sides, rotates it by 180º and returns it to the original position. The turning process is undertaken with sufficient coordination so as not to shake the column supporting the other cheeses. With the two operations previously outlined a uniform drying and curing is achieved, thanks to the application of pressure changes, namely a depression of 800 millibars absolute pressure for 60 minutes followed by a positive pressure of 1025 millibars absolute pressure for 10 minutes. On finishing the positive pressure cycle, it is recommendable to activate valve 3.05, so that the internal pressure forces out the steam in the heat exchangers 1.03. Interspersed in the pressure changes, a decreasing vacuum of 2 minutes using apertures 1.10 towards the external atmosphere with a combination of a vacuum inside 1.07 and 1.08 controlled by computers with pressure sensors 1.18. This produces strong currents of air which remove the moisture on the foodstuff.

The programmed sequence then continues with the negative pressure, opening to the exterior, positive pressure followed by decreasing vacuum, all at room temperature and predetermined time intervals. During this process the refrigeration system 1.03 will be assigned values of around 12º C with a relative humidity of around 80%. The process with the repetition of the aforementioned cycles is to take a time relative to the capacity of the product, power of the equipment, along with the predetermined value of the finished product which could take months of curing in comparison with the outlined system. It is also possible to include rest time between the repeated cycles.

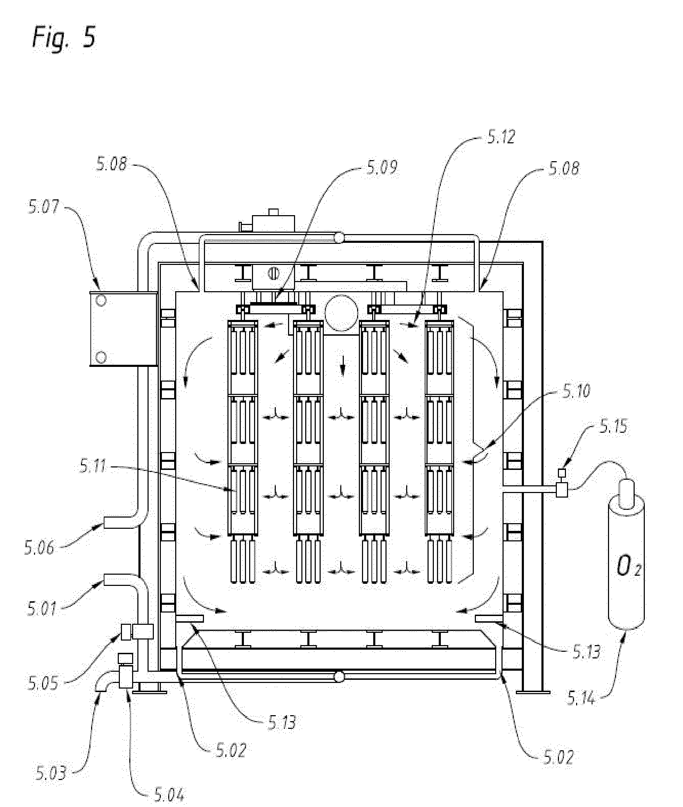

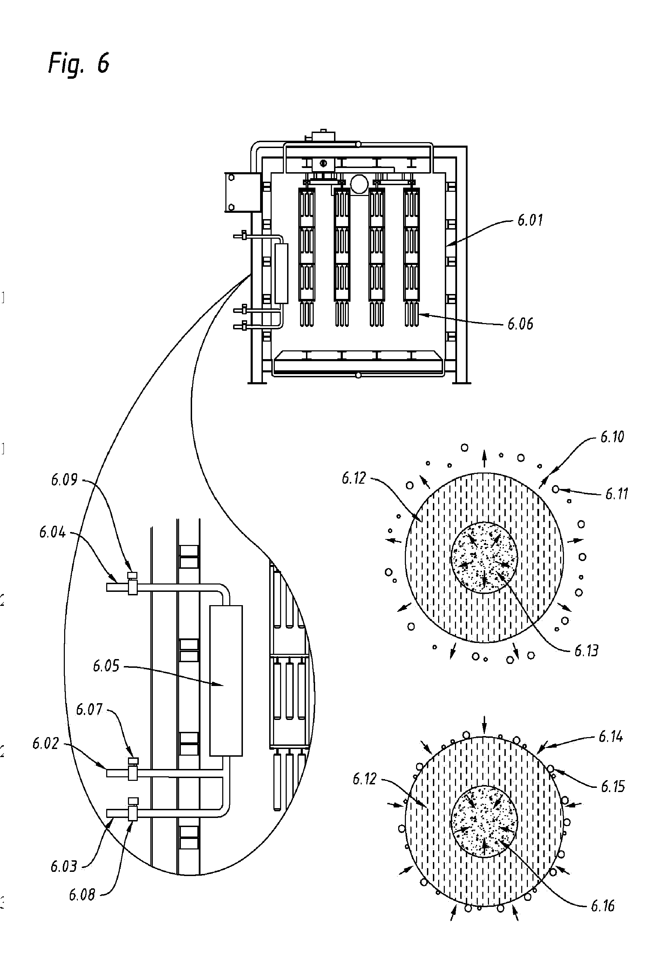

In a second example of the application according to figures 5 and 6 of the tests undertaken for the objectives of this invention, it is also possible to apply to a hyperbaric chamber or airtight container; in these cases the curing of sausage products 5.11. The foodstuff rests on square supports 5.10, guide rails support bars on which the foodstuff is hanging to dry or cure. The supports are attached to a moving chain system which moves the product through a closed circuit inside the chamber of container. This movement permits the curing meat to be exposed to the same air currents thereby achieving a homogeneous curing process with the application of the changes of pressure, moisture and refrigeration. In the example atmospheric air is to be used, applying a depression or vacuum 5.02 of 500 millibars absolute pressure for 30 minutes followed by positive pressure 5.08 of 1050 millibars absolute pressure, for 10 minutes. In between pressure intervals, aperture 5.09 is to be opened to external atmosphere for 2 minutes with the combination of a decreasing vacuum 5.01 controlled with 5.05, thereby provoking renovation of the air. Taking advantage of the positive pressure discharge, the extraction of liquid residues from the heat exchanger is undertaken. The refrigeration system is also activated during the process, which is to have a value of around 14º C with a relative humidity of around 70%. It is possible that during the application of the vacuum, as in the previous example of the application of 500 millibars absolute pressure in a relatively long treatment time of about 2 hours, a drop in oxygen levels is experienced. For its detection and control, it would be recommendable to obtain the data of oxygen consumption inside the chamber, through the evolution of the foodstuff or with oxygen sensor O₂. To achieve correct oxygen may have to be administered in the form of pressurised bottles with high purity. To administer the O₂, the preferred option would be to open the chamber to the external atmosphere or by using a decreasing vacuum which permits renewal of the internal atmosphere, activating the ventilator of the refrigeration equipment for a better distribution of the gases in the chamber. This implies that the changes towards the positive pressure will increase the internal absolute pressure, but this also facilitates the gas entering the chamber (with its associated O₂), can penetrate as a result of the pressure difference. Therefore, the curing can take place at pressures lower than the external atmosphere, with the corresponding advantage of increased dehydration as the product is constantly at negative pressure. Here it should be noted that the ventilator that recirculates the air in the chamber needs sufficient capacity, through a frequency converter, to vary the flow depending on the internal pressure of the chamber (gas density). The removal of condensation is also catered for using tank 3.04a located between two valves, to avoid an excessive intake of exterior gas. The superior valve, which connects the condensers of the coolers, is open during the process whilst the lower valve 3.05a is closed and when the tank is full the position is inverted, thereby allowing the gases to be discharged without an excessive intake of additional gases from the outside. It is also possible to include a valve which is connected to the pressurising system, so that once the lower valve is open (discharging the condensation) the tank is pressurised and a faster more efficient discharge is achieved.

Before arriving at the final drying phase the temperature is dropped to 4º C applying absolute pressures of 900 millibars for 5 minutes, followed by opening the chamber to the exterior, a decreasing vacuum and then a positive pressure of 1100 millibars for 10 minutes with external atmospheric gas. It should be noted that this treatment also dehydrates the product, and care should be taken so that the values do not drop below stipulated criteria. Using this method, with a time of approximately 3 days, once the product has reached its final curing phase the same quantity of oxygen is absorbed as in the surrounding atmosphere, allowing the product to be packed on leaving the chamber, preferably vacuum-packed. It is also possible to add a gas such as CO₂, N2 or varying combinations of both. This gives an added value to the curing process, both through improved protection and conservation of microorganisms, as well as giving off more intense flavours and aromas when the consumer opens the packet.

A third example of a process illustrated in Figure 6 undertaken in another of the tests is that to conserve the aromas of the cured products.

In this drawing a filter or selective gas membrane 6.05 is shown, whose function is to retain the aromatic molecules 6.15 which, in this case are kept inside the container 6.01. Filter 6.05 is required for the airtight chamber, and preferably controlled gases 6.09 are circulated where 6.13 introduces them or 6.16 extracts them, likewise 6.12 prevents the aromatic molecules 6.15 from leaving chamber and using positive pressures 6.13 to unblock 6.11 said filter 6.12, and in the case of a more thorough clean of the controlled administration 6.07 of steam 6.02.

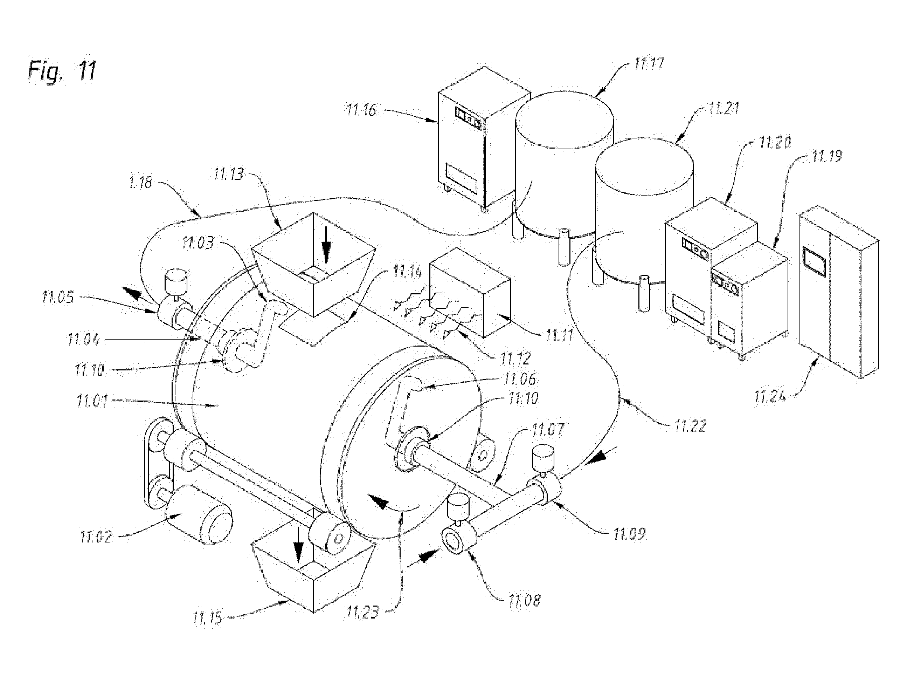

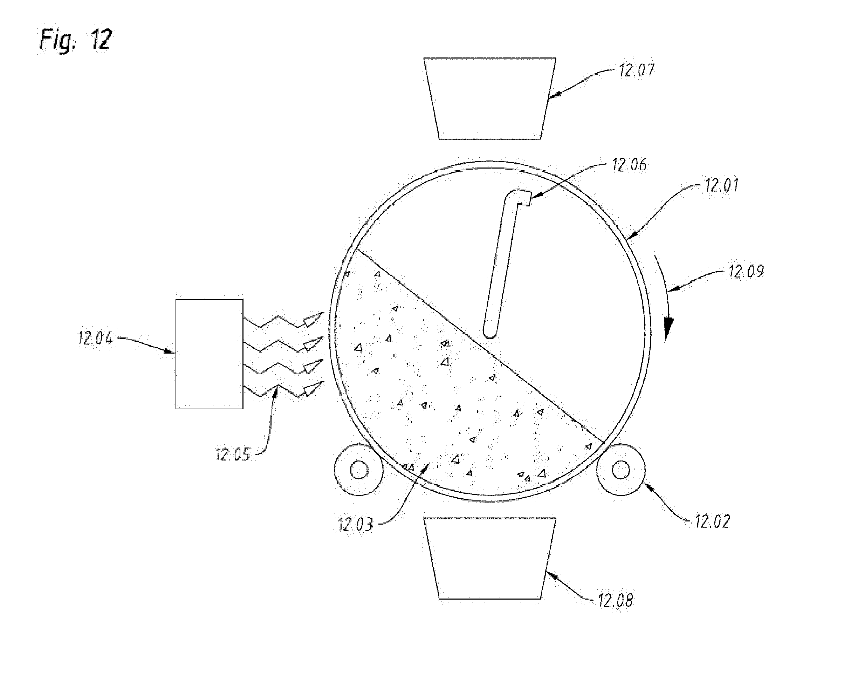

A fourth example of the application according to Fig 11 and 12 of the tests undertaken is that of the process in a hyperbaric chamber or rotating airtight drum in order to treat cocoa by-products to remove bitterness. In this example an oxidising gas is used, in this case atmospheric gas. Whilst the control sensors of the electronic components are not shown in the drawings they are necessary for the correct functioning of the process.

A pressure treatment similar to the previous examples is used, whereby a positive pressure is applied, followed by an extraction of the vapours generated using negative pressure, a decreasing vacuum and subsequent predetermined repetitions of the cycle. The objective of this example is to extract the bitterness of the cocoa and its derivatives such as chocolate. The process consists of forcing the oxygen present in the atmosphere by positive pressure into the product to be treated (pieces of cocoa bean without their skin). This generates a reaction of gases that are extracted using a combination of decreasing vacuum and/or negative pressure. The pressure values can be similar to those quoted in previous examples. With respect to the temperature, there are two possibilities: Firstly and most economically, at room temperature; secondly, the temperature is reduced to fridge temperatures with the combination of pressures such that the oxygen dissolves in the product and subsequently the temperature is increased for a more controlled reaction. In this particular case, it is preferable that the beans are moved so that the treatment is as homogeneous as possible. A rotating drum at less than 100 rpm prompts the rise and fall of the beans to achieve this effect. In the case that an excessive movement damages the beans the possibility to stop and restart the drum rotation is considered. It should be noted that the rotating drum, of an elongated form, is constructed to withstand the pressure changes. It also has connections using rotating joints in its sides in order to circulate the gases, locating in one extreme the control for the vacuum, and the other extreme for the control of pressure, whose tube has an alternating intake to the external atmosphere to apply the decreasing vacuum. The combination of the 3 connections allows for the renewal through the blowing out and/or decreasing vacuum, the oxidation through the application of compressed air and the extraction of resulting gasses using the vacuum. This refines the treated product.

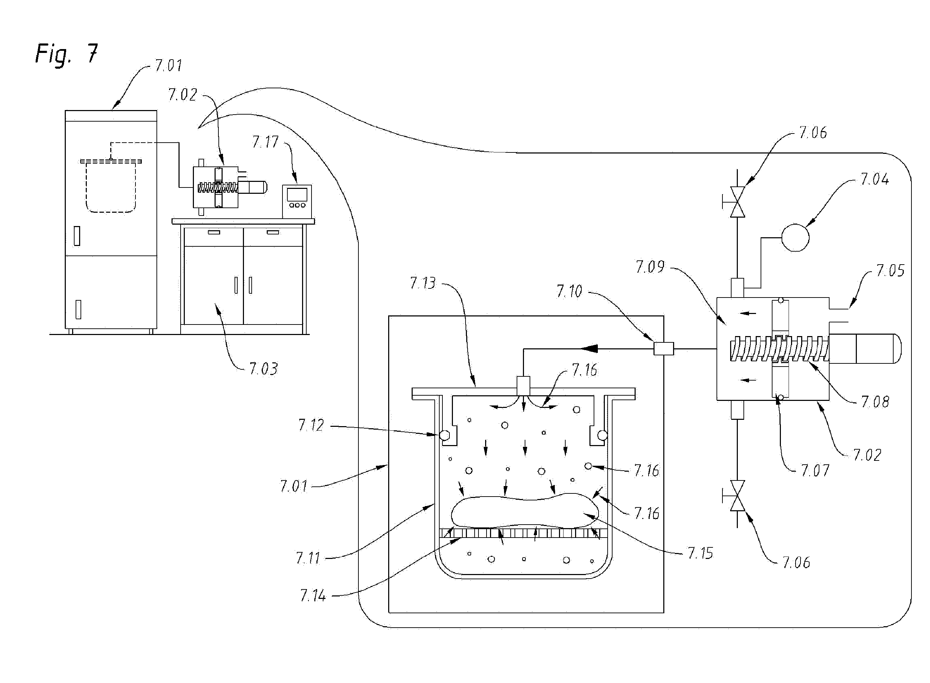

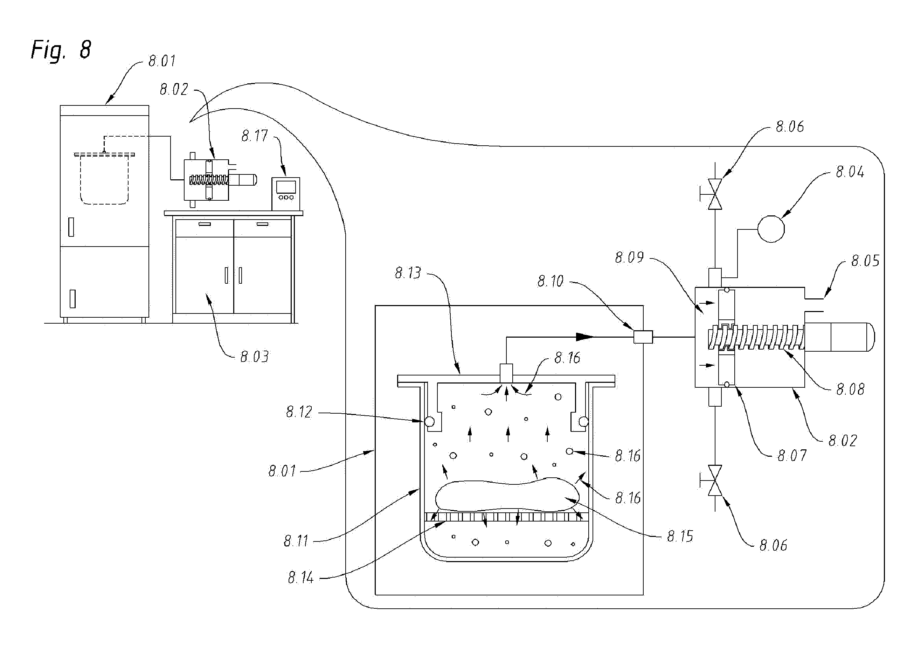

A fifth example as illustrated in fig 7 (positive pressure) and fig 8 (negative pressure or vacuum) further clarifies the process. Focusing on fig 7, a hermetically-sealed recipient for domestic usage is shown which could be stored in a refrigerator 7.01 and 8.01. Using at least one pneumatic connection, such as in 7.10 and 8.10 (or through the seal of the fridge door) which is connected to recipient 7.11 with the compressor 7.02 at positive pressure and 8.02 at negative pressure, located outside the refrigerator. In this case the gas to be applied is the surrounding air in order to facilitate domestic use, with a range of atmospheric pressure values, in positive sense fig.7 or negative sense fig. 8, a two-way intermediate valve 7.06 and 8.06 which when activated is connected with the surrounding air for the renewal of air inside the chamber preparation of the pressure to the chambers 7.09 and 8.09. In this example the process has been performed on red meat, such as a hamburger 7.15 and 8.15, placed in a hermetically-sealed container connected with pressurised gas 7.16 and 8.16, allowing for pressure changes, programmed using automatic systems 7.17 and 8.17. In the lower part of the recipient a grill is provided 7.14 and 8.14 in order to separate the resulting liquids given off. The process is the application of positive pressures Fig. 7 for a predetermined period of time, interspersed with depressions or vacuum Fig. 8 also of predetermined time, both at atmospheric pressure ranges and with time for renewal of the internal air using valves 7.06 and 8.06, allowing for the accelerated curing of the meat.

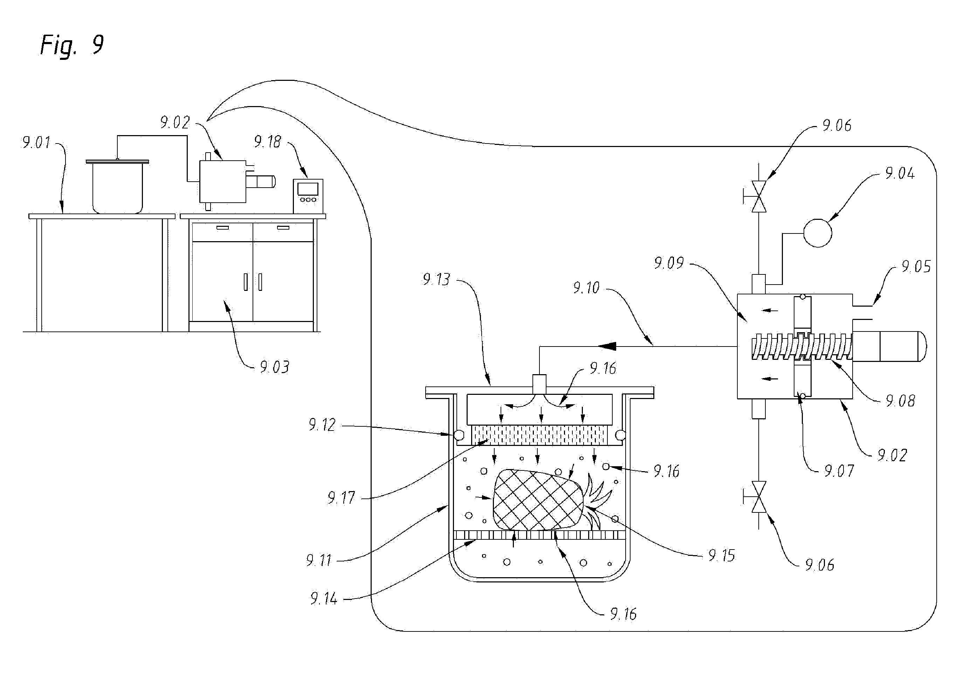

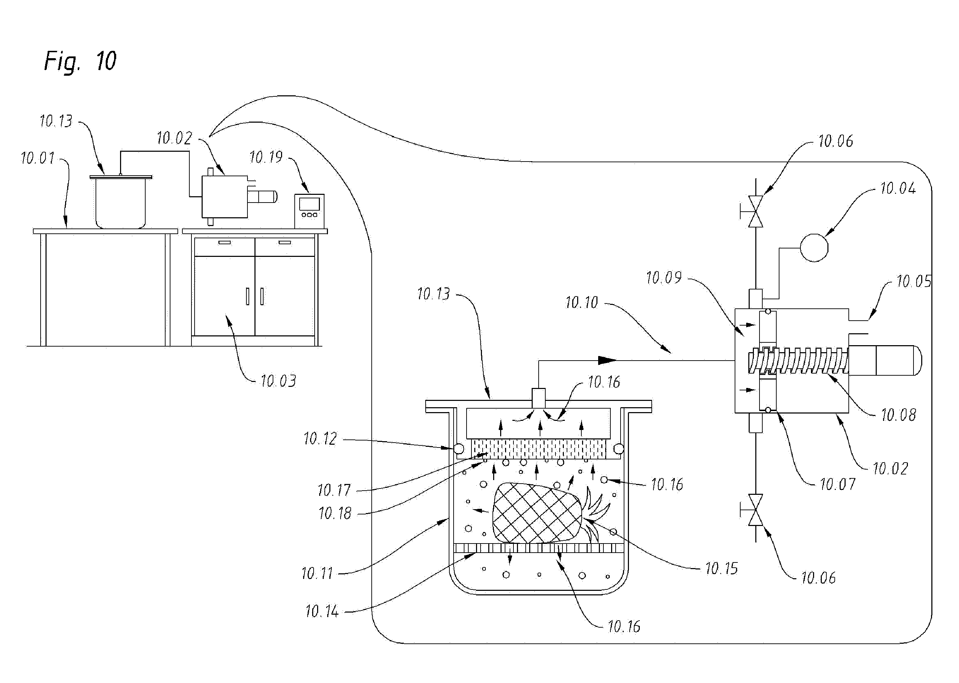

In a sixth example, referring to figs 9 and 10 a hermetically-sealed container 9.11 and 10.11 is shown with a selective gas membrane 9.11 and 10.11 without temperature control 9.01 and 10.01. Fig 9 refers to the process using positive pressure where the administered gases unblock the membrane of the aromatic elements retained by the process of depression or vacuum illustrated in fig 10. These processes of application and extraction of gases are similar to previous examples, with this final example varying only in respect to: the temperature control; the product (fruit); and the selective gas membrane which make this example different with respect to the example given for figs 7 and 8.

## Claims

1. Method for a drying, curing and conservation treatment for solid and semi-solid foodstuffs, **characterised by** placing said foodstuffs inside a hermetically-sealed chamber and application of gas with varying positive or negative pressure in relation to initial pressure, creating a sequence of cycles of pressure values greater or less than a range of atmospheric values, introducing an oxidising agent in a controlled way such that it reacts with the foodstuff and in one of the cycles a part of these gases are removed from the chamber.

2. Method according to claim 1 **characterised by** the opening of the chamber and connecting with the external atmosphere in order to renew or blow out the interior atmosphere for a predetermined period of time, Turing one or more of the positive or negative pressure changes during the drying process.

3. Method according to claim 2, **characterised by** the monitoring of the external and internal chamber pressure to control the flow direction in or out of the chamber.

4. Method according to claim 1, **characterised by** the introduction of a predetermined volume of oxidising agent and the selective undertaking during an established time period of the extraction of part of the gas present in the chamber.

5. Method according to claim 1 **characterised by** selection of oxidising agent ozone or oxygen.

6. Method according to claim 1 or 5 **characterised by** use of atmospheric oxygen for the reaction with the foodstuff.

7. Method according to claim 1 **characterised by** hyperbaric treatment chamber with asociated means of positive and negative pressurisation to apply greater or lower values than that of surrounding atmosphere.

8. Method according to claim 7 **characterised by** temperature control in the inside of the chamber.

9. Method according to claim 7 **characterised by** the control of moisture in the inside of the chamber.

10. Method according to claim 7 **characterised by** controlling the speed of the circulating internal air.

11. Method according to claim 1 **characterised by** the use of a selective gas membrane placed inside conduits destined for the extraction of gases from the treatment chamber in order to retain part of the aroma of the foodstuff.

12. Method according to claim 11 **characterised by** application of a steam flow to clean the membrane or selective gas filter.

13. Method according to claim 1 or 7 **characterised by** a depression cycle inside the chamber in order to introduce aromas from a storage tank at a pressure higher than that of the chamber.

14. Method according to claim 1 **characterised by** constantly moving the foodstuff inside the chamber in a closed circuit.

15. Method according to claim 1 **characterised by** the atomisation of liquids at the surface of the foodstuff.

16. Method according to any of the previous claims **characterised by** accelerated curing of meat products.

17. Method according to any of the previous claims **characterised by** application to ripening of fruit.

18. Method according to any of the previous claims **characterised by** application to fish products.

19. Method according to any of the previous claims **characterised by** application to cocoa bean by-products.

20. Method according to claim 1 **characterised by** dissolution of atmospheric oxygen into treated foodstuff.

21. Method according to claim 20 **characterised by** adding at least one additional gas to the treated product for improved conservation.

22. Method according to claim 21 **characterised by** said gas being CO₂.

23. Method according to claim 21 **characterised by** said gas being N₂.

24. Method according to claim 21 **characterised by** said gas being a combination of CO₂ and N₂.

25. Installation for a drying, curing and conservation process for solid or semi-solid foodstuff which consists of a hermetically-sealed chamber with vacuum and alternating pressure connections to vary internal pressures in a controlled manner and to maintain pressures for predetermined periods of time. Said chamber also includes means of administering and extracting at least one oxidising agent and also includes conduits and openings connected to the outside of the chamber for the renewal and purging of the internal atmosphere.

26. Installation according to claim 25 **characterised by** the selective retention of determined gases present in the treatment chamber.

27. Installation according to claim 25 **characterised by** the use of smoking and/or aromatic substances.

28. Installation according to claim 25 **characterised by** means of controlling temperature, moisture, and recirculation of air inside the chamber.

29. Installation according to claim 25 **characterised by** chamber in the form of a rotating drum which moves the product constantly during the process.

30. Domestic appliance for the drying, curing, ripening and conservation of solid and semi-solid foodstuffs which consists of a hermetically-sealed chamber or recipient for storage during treatment, the chamber being transportable and having has associated means of ventilation and varying pressure for predetermined periods of time thereby inducing varying pressure cycles which introduce an oxidising gas into the foodstuff in order to dissolve and react with the foodstuff and remove at least some of the gasses from the chamber.

31. Domestic appliance according to claim 30, **characterised by** use of conduits or openings connected to the outsider of the chamber to purge or renew the chamber with fresh air and means of selectively opening said conduits and openings.

32. Domestic appliance according to claim 31, **characterised by** said means of increasing or reducing the pressure with at least one conduit through which compressed air gases circulate and which permit the installation of the chamber at a certain distance from the compressor, such as in a refrigerator.

33. Domestic appliance according to claim 30, **characterised by** use of atmospheric gas (air) as the oxidising agent.

34. Domestic appliance according to claim 30, **characterised by** use of a grill to support the foodstuff to be treated.

35. Domestic appliance according to claim 31, **characterised by** a membrane or selective gas filter in an area prior to treatment of foodstuff.
